# EUROPEAN PATENT SPECIFICATION

(11) **EP 3 699 873 B1**
(45) Date of publication and mention of the grant of the patent: **18.10.2023**
(21) Application number: 20158909.0
(22) Date of filing: 22.02.2020
(51) Int. Cl.: G07C 9/37, G07C 9/38, E05B 17/22

(54) **METHODS AND SYSTEMS FOR AN ACCESS CONTROL SYSTEM USING VISUAL RECOGNITION**
VERFAHREN UND SYSTEME FÜR EIN ZUGANGSKONTROLLSYSTEM MIT VISUELLER ERKENNUNG
PROCÉDÉS ET SYSTÈMES POUR UN SYSTÈME DE CONTRÔLE D'ACCÈS UTILISANT LA RECONNAISSANCE VISUELLE

(30) Priority: 21.02.2020 US 201916798093; 22.02.2019 US 201962809416 P
(43) Date of publication of application: 26.08.2020
(73) Proprietor: Sensormatic Electronics, LLC, Boca Raton, FL 33487 (US)
(72) Inventor: NEILL, Terrence, Boca Raton, Florida 33487 (US); BOYES, Derek J, Boca Raton, Florida 33487 (US); DONAGHY, Martin J., Boca Raton, Florida 33487 (US); FALIK, Yohay, Boca Raton, Florida 33487 (US); ROZNER, Amit, Boca Raton, Florida 33487 (US)
(74) Representative: Hafner & Kohl PartmbB

(56) References cited:
- EP-A1- 3 445 046
- US-A1- 2018 108 192
- US-A1- 2018 122 167

## Description

### TECHNICAL FIELD

The present disclosure generally relates to an access control system implementing visual recognition, and in some cases in conjunction with visual and audible feedback, for governing access to a specific location.

### BACKGROUND

An access control system is often used at public and private premises, such as households, commercial buildings, businesses, retail establishments, schools, hospitals and government buildings, to list a few examples. Access control system nodes may be installed at access points of the premises (e.g. front and interior doors of a building) to control access to restricted areas, such as the building itself or to areas within the buildings. The access control system authenticates (or authorizes) an access card or pass held by an individual and then permits individuals with authenticated access cards to access the restricted areas through the access point.

Historically, the main components of the access control system are access card readers and possibly door controllers. The access card readers are often installed at the access points and enabled presentation of credentials to obtain access to the restricted areas. Typically, individuals interact with the access card readers by presenting access cards, such as keycards or contactless smart cards, to the readers. The access card readers read the credential information of the access card, and compare the information against a database of authorized individuals to determine if the individual presenting the access card is authorized to access the restricted areas. If the individual is authorized, then the access card reader might signal the door controller, for example, to unlock doors or not generate alarms.

EP 3 445 046 A1 discloses a doorbell camera for illuminating and capturing scenes.

US 2018/108192 A1 discloses an access management system. Document US2018/122167A1 discloses an access system with liveness detection.

In view of the foregoing, there is a need to more efficiently and more securely, and in more user friendly manner, control access to restricted areas.

### SUMMARY

The following presents a simplified summary of one or more implementations of the present disclosure in order to provide a basic understanding of such implementations. This summary is not an extensive overview of all contemplated implementations, and is intended to neither identify key or critical elements of all implementations nor delineate the scope of any or all implementations. Its sole purpose is to present some concepts of one or more implementations of the present disclosure in a simplified form as a prelude to the more detailed description that is presented later.

The invention is defined by the appended claims. The present disclosure relates to an access control system in accordance with claim 1 and to a method in accordance with claim 9.

Additional advantages and novel features relating to implementations of the present disclosure will be set forth in part in the description that follows, and in part will become more apparent to those skilled in the art upon examination of the following or upon learning by practice thereof.

### DESCRIPTION OF THE FIGURES

The novel features believed to be characteristic of the disclosure are set forth in the appended claims. In the descriptions that follow, like parts are marked throughout the specification and drawings with the same numerals, respectively. The drawing figures are not necessarily drawn to scale and certain figures may be shown in exaggerated or generalized form in the interest of clarity and conciseness. The disclosure itself, however, as well as a preferred mode of use, further objects and advances thereof, will be best understood by reference to the following detailed description of illustrative aspects of the disclosure when read in conjunction with the accompanying drawings, wherein:
FIG. 1A illustrates a schematic view of an example operating environment of an access control system implementing visual recognition, including an example front view a user attempting to access a location via a door, and also including an inset example side view of an alternative operating environment similarly including a user attempting to access a location via a door, in accordance with aspects of the present disclosure;
FIG. 1B is a schematic view of another example operating environment of an access control system implementing visual recognition similar to FIG. 1A but further including a person tracking unit in accordance with aspects of the present disclosure;
FIG. 2 is a flowchart of an example method of operation, and interactions between various modules of, the access control system implementing visual recognition, in accordance with aspects of the present disclosure;
FIG. 3 is a front view of an example visual and audible feedback access control device in accordance with aspects of the present disclosure;
FIG. 4 is a front view of an example set of illumination sequences of a visual feedback access control device in accordance with aspects of the present disclosure;
FIG. 5 is a message and data flow diagram of an example method of access control implementing visual recognition in accordance with aspects of the present disclosure;
FIG. 6 is a block diagram of various hardware components and other features of a computer system that may operate the access control system in accordance with aspects of the present disclosure; and
FIG. 7 is a block diagram of various example system components, for use in accordance with aspects of the present disclosure.

### DETAILED DESCRIPTION

This disclosure relates to systems, devices, and methods for managing and controlling access to specific locations by specific users, such as authorized and/or unauthorized users attempting to access secure locations, by determining the identities of users based upon their visual appearance. The present disclosure describes a system having a separate remote sensor device, such as a camera, for obtaining an image of a user and providing visual and/or audible feedback as to state of the access control process (e.g., image acquisition, identity determination, authentication, and/or access determination), and a separate management system for determining both the identity of the user and the access permission level of the identified user.

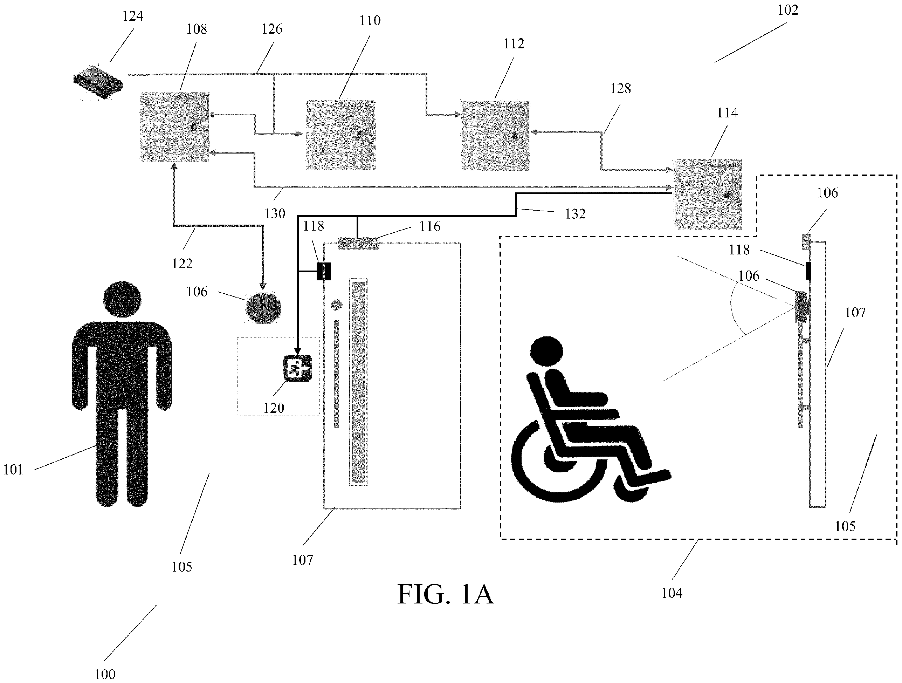

Referring to FIG. 1A, in an example implementation, an operating environment 100 includes an access control system 102 for managing and controlling access to one or more specific locations 105 by one or more specific users 101, by determining the identities of users based upon their visual appearance. The access control system 102 comprises a sensor 106, such as a camera, that obtains an image of a user 101. In one aspect, the image generated by the sensor 106 may be a video comprising a plurality of image frames, or a single still frame. For example, in one example implementation, the sensor 106 may be located near a door or access point on a wall or ceiling, where a traditional card access reader would be located controlling access. The sensor 106 comprises two cameras devices used in conjunction with each other. The first camera device captures an image of a user 101 comprising their face as they approach the location of the door or access point, while the second camera device supplements the image obtained by the first camera with liveliness (e.g., the captured image is not a picture, such as based on movement) and/or depth detection information generated by or detectable using one or more additional image frames.

In response to obtaining an image or images, the sensor 106 transmits the raw data of the image(s) to a control unit 108 via bus 122. In an implementation, bus 126 may be a CAT6 shielded cable or any other suitable bus that provides both data transfer and power to the sensor 106.

The control unit 108 receives the raw data from the sensor 106, and forwards the raw data via bus 126 to a facial recognition server 110. In another example implementation, the control unit 108 may support wired or wireless communication (e.g., Bluetooth^{tm} and/or WiFi, which can allow for multifactor authentication, when implemented in conjunction with facial recognition. Further, bus 126 may also be connected a network switch 124 (*e.g.,* a POE+ switch), allowing broadband capability for remote access.

The facial recognition server (FRS) 110 receives the raw live video and/or the still image(s) from one or more sensors 106 for processing to determine an identity of the user. The FRS 110 also performs liveness detection of the users based on the raw live video stream to determine if the users identified are actually alive rather than a decoy, for example, a photograph or a mannequin of a user. Further, in another example implementation, the FRS 110 stores digital representations of facial data entered previously, not actual images of faces. Examples of digital representations of facial data may include, but are not limited to, bitmaps, hashed or other encoded versions of the image data, etc. The FRS 110 may be updated with new or additional digital representations of users via management server 112. In one example implementation, the FRS 110 performs facial recognition on the raw stream obtained from the sensor 106. The FRS 110 may be located in the same location as the sensor 106 and control unit 108, for example, the same building or room, or may be located in a remote location, for example, the cloud or a remote building from the management server 112 and the sensor 106. In one example of operation, the FRS 110 compares the obtained facial recognition of the raw data stream to the digital representations of faces previously stored in a database to determine whether there is a match. In response to the comparison, the FRS 110 generates a determination signal indicating if the user is known (e.g., a match with the previously entered facial data is found or determined within a threshold level of confidence) or unknown. In another example implementation not falling under the scope of the invention, the FRS 10 may not generate a determination signal if the user is unknown in the database. In another example implementation, the generated determination signal may further comprise a confidence score. The FRS 110 transmits the generated determination signal to the control unit 108 and/or the management server 112 via bus 126.

The management server 112, described in detail below, may also receive the determination signal via the bus 126. The management server 112 may log/record the determination signal; for example, the comparison results may be logged/recorded, the confidence score may be logged/recorded, the time and/or date the comparison was performed may be logged/recorded, the decision by the FRS 110 may be logged and/or recorded, and/or the identity of the user may be logged/recorded. The management server 112 may be located in the same location as the sensor 106 and control unit 108, for example, the same building or room, or may be located in a remote location, for example, the cloud or a remote building from the management server 112 and the sensor 106.

Referring back to the control unit 108, the FRS 110 may transmit the determination signal via bus 126 to the control unit 108, which may operate to control access to the location 105. The control unit 108 may transmit the determination signal to an access device 114 via bus 130. In one example implementation, the control unit 108 may support Bluetooth and/or WiFi communications, which may allow other types of multifactor authentication. In one example implementation, the control unit 108 may transmit an indication signal back to the sensor 106 via bus 122. The sensor 106 may pass indications to the user at the location of the sensor 106 via lights and/or sound. The visual or light-based indications will discussed in detail below. In one example implementation, control unit 108 may exchange messages with access device 114 via bus 130, wherein such communication messages may be in a particular protocol, for example, Open Supervised Device Protocol (OSDP) and Wiegand. The access device 114 may store access control information. The access control information may include if a user is allowed access to a specific location. For example, the access device 114 may store information indicating that a known user, *e.g*., user A, is permitted to access a specific location. Further, the access control information may be stored as a lookup table comprising information on specific users and the specific locations for which they may be allowed access.

The management server 112 may supply the access data stored in the control device 114 via bus 128. The access data may be updated on a specific schedule, for example, every day, or may be updated when new information is placed in the management server 112. In another example implementation, the access data may be stored solely on the management server 112, or shared between the management server 112 and the control device 114. For example, the access device 114 may receive the determination signal via bus 130 that indicates that user A is recognized and identified, as described above. The access device may attempt to determine if user A has access to location B via the access data stored in the device, or request the data from the management server 112. In one example implementation, the data may be stored on the access device 114 to ensure access to specific locations if the bus 128 is cut, disconnected or damaged. Upon determination to grant or deny access to an identified user, an output signal is transmitted via bus 132 and 130 indicating the access status of the identified user.

The control unit 108 may receive the output signal via bus 130 comprising the access status indicating if the identified user has been granted access or denied access to a specific location. In one example implementation, the control unit 108 may transmit the output signal back to the sensor 106 via bus 122. The sensor 106 may output indications to the user at the location of the sensor 106 via lights and/or sound based on the output signal. The visual indications and audible indications will discussed in detail below.

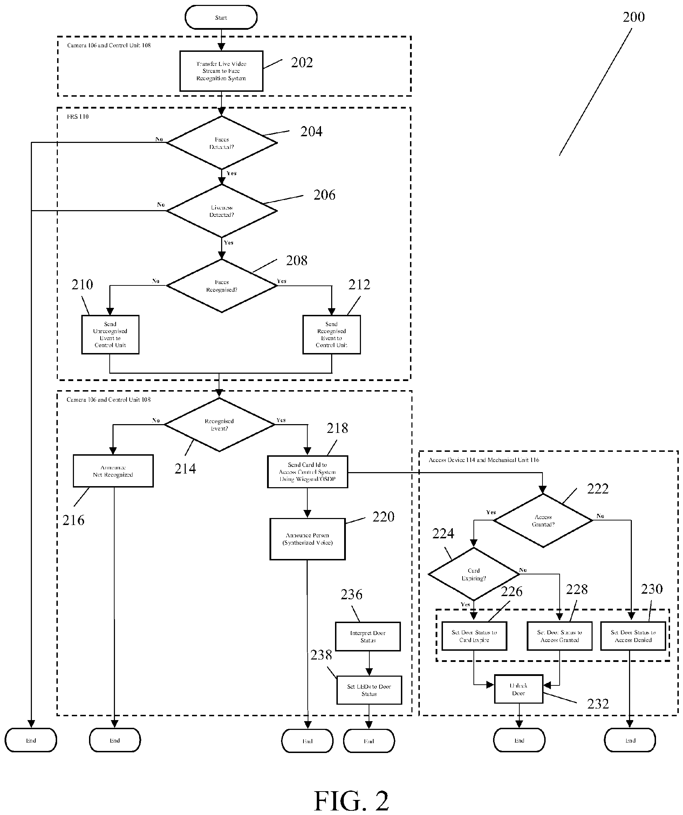

The access control system further includes a controllable locking unit 116, for example attached to a door hinge, frame, door knob, handle, lock, or another feature of a door or structure removably blocking access to the location 105. The locking unit 116 receives the output signal, via bus 132, where the output signal includes an access status indicating if the identified user has been granted access or denied access to the location 105. For example, the locking unit 116 may be an electronically controllable mechanical actuator that can be controlled to move between a locked position and an unlocked position. If the user has been identified, as described above, and has been granted access to the location 105 via the control device 114, the locking unit 116 unlocks the door 107 to enable the user 101 to access the location 105. In an example, implementation, a door sensor 118 may be used to determine if the door 107 has been opened, closed, how long the door 107 has been opened and how long the door 107 has been closed, in order to make subsequent access-related decisions. For example, the locking unit 116 may not unlock the door again if the door has not yet been determined to be closed via door sensor 118. Further, an emergency opening device 120 may be present on the reverse side of the door. The emergency opening device 120 may be triggered by a user 101 in an emergency to immediately unlock the door via the locking unit 116. Further details regarding an example method of operation of the system illustrated in FIG. 1A will be described below with reference to FIG. 2.

In a further example implementation, operating environment 104 includes the same features described above, but further illustrates the comprehensive operating abilities of the sensor 106, e.g., being able to detect and make access decisions for all types of users.

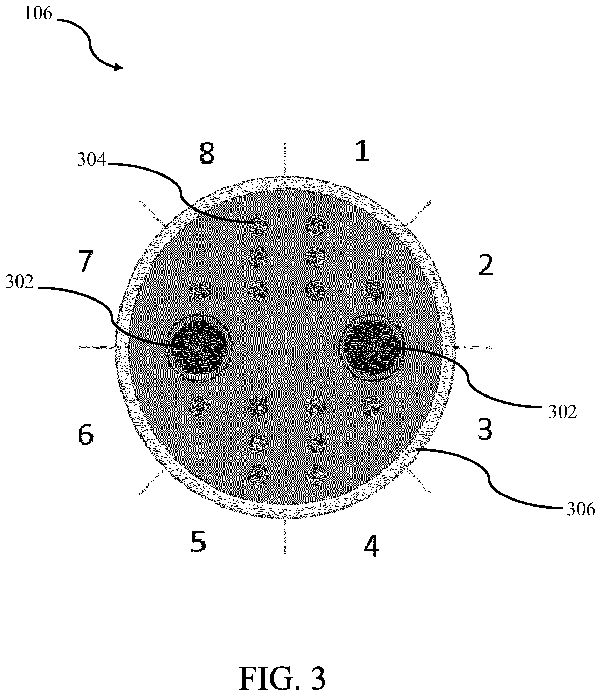

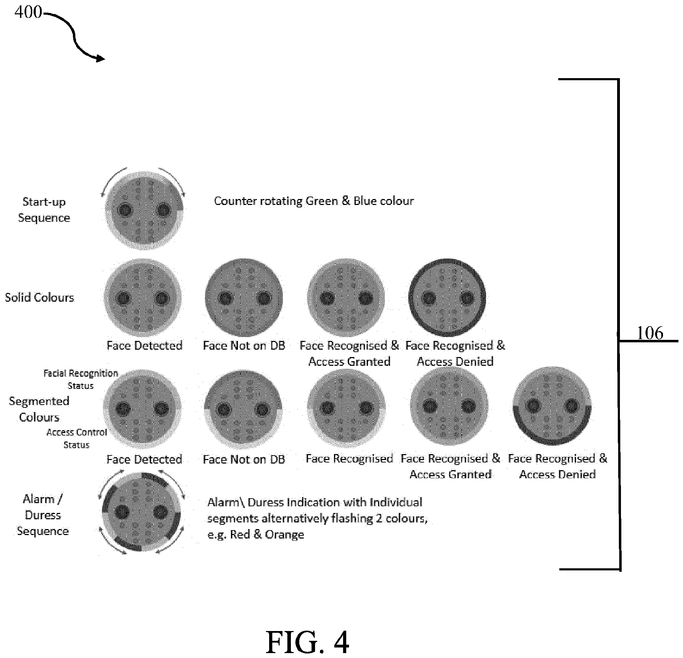

The structure and configuration of the sensor 106 is described in detail below with reference to FIG. 3 and FIG. 4.

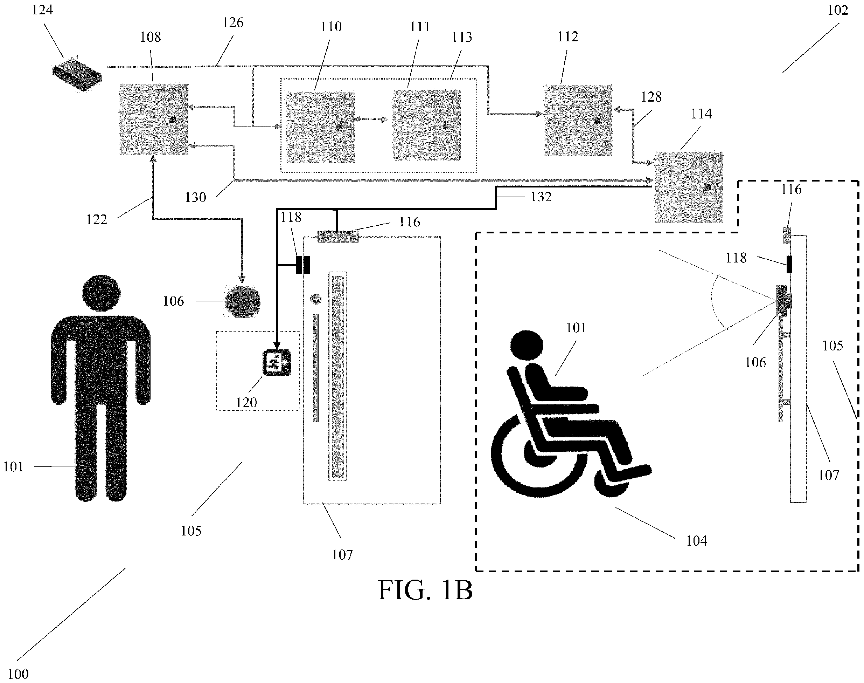

Referring to FIG. 1B, in another example implementation, the operating environment 100 includes access control system 102 for managing and controlling access to specific locations by specific users, by determining the identities of users based upon their visual appearance according to an aspect of the disclosure. As described above with reference to FIG. 1A, the same aspects are illustrated in FIG. 1B. In one aspect of the invention, the FRS 110 further interacts with a person-tracking unit 111. The person-tracking unit 111 may further comprise a person tracking system, a person re-identification system and a video recording system. These three systems may all be placed within the person-tracking unit 111, or separated into discrete components interacting with the person-tracking unit 111. Together, the FRS 110 and the person-tracking unit 111 may be referenced as the tracking system 113. In one example implementation, rather than using facial recognition alone, as described above, a user may be further identified based on the images captured from sensor 106, for example, the clothes that they are wearing, their physical proportions, and/or other non-biometric data particular to the user. Working in conjunction with the FRS 110 and the person-tracking unit 111, the tracking system 113 may provide improved user validation for the access control system 102.

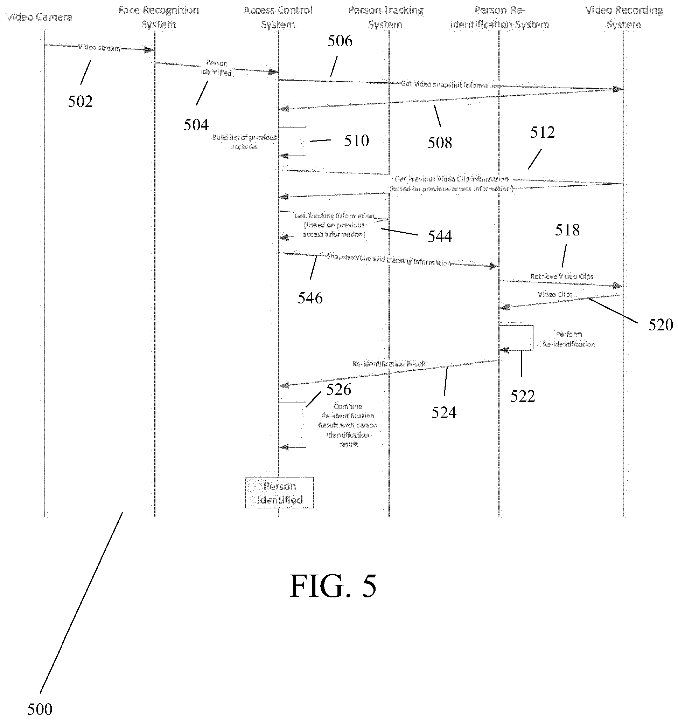

As described above, the sensor 106 may supply a live raw video stream to the tracking system 113. The live raw video stream may be generated by sensor 106 at a specific location, or all cameras 106 from various locations within a building/location. A video recording system (not shown) may record the video from all cameras 106 supplying live raw video streams. The FRS 110 may analyze the live raw video and provide an output containing the identified user or users in the live video. As described above, the output may also contain a confidence level. The person-tracking unit 111 will also analyze the live raw video stream provided by the sensor 106 by comparing the live raw video with stored historical video. The person-tracking unit 111 may provide an output containing the identified user or users in the live video. The output from the person-tracking unit 111 may also contain a confidence level of such determination. In one example implementation, the person-tracking unit 111 may also store the video, the location and/or time that a user is identified as the historical data. The outputs from the FRS 110 and the person-tracking unit 111 may be combined to produce a more accurate identification result, or allow a user to be positively identified with a higher confidence store than with facial recognition alone. In one example implementation, when facial information is not complete, for example, partially obscured or from a longer distance away, the tracking system 113 may still provide identification information with a confidence score based on a previous, higher confidence identification in combination with matching one or more characteristics associated with the previous identification, e.g., a particular size, shape, and/or color of an article of clothing. The method of the system illustrated in FIG. 1B will be described below with reference to FIG. 5.

Referring to FIG. 2, an example of a method 200 of the operation of and interactions between various modules of the access control system implementing visual recognition is explained in accordance with one implementation. FIG. 1A and 1B may be referenced in combination with the flowchart of FIG. 2. To start, method 200 includes a user attempting to access a specific access control location, as described above. At step 202, the sensor 106, *e.g.,* a camera, may generate the raw live video stream and transmit the raw video steam to the control unit 108. The FRS 110 receives the raw video steam at step 204 and determines if facial data can be determined, as described above. If the user's face is not detected the method ends. If the user's face is detected, liveness is determined at step 206. If the user does not exhibit liveness, the method ends. If the user is exhibits liveness the FRS 110 attempts to identify the user at step 208. If the user is not identified by the FRS 110, a signal is sent to the control unit 106 at step 210. If the user is identified by the FRS 110, a signal is sent to the control unit 106 at step 212

At step 214, the control unit 108 determines if the user is identified by the FRS 110. If the user is not identified, a signal is sent to the sensor 106 at step 216. The sensor 106 receives the signal sent at step 216 and may be configured to provide a visual and/or audible alert to the user at the access location, as described below. If the user is identified, a signal is sent to the sensor 106 and the access device 114 at step 218. The sensor 106 receives the signal sent at step 220 and may be configured to provide a visual and/or audible alert to the user at the access location, as described below. Further, the access device 114 receives the signal transmitted during step 218. At step 222 the access device determines if the identified user is granted or denied access to a specific location. If the user is denied access, the locking unit 116 does not unlock the door. Further, (not shown) a signal may be sent to the sensor 106 at step 230 for signal interpretation at step 236. The sensor 106 may receive the signal sent at step 230 and may be configured to provide a visual and/or audible alert to the user at the access location, as described below. If the user is granted access, the access device 114 determines if the user's credentials are expiring soon at step 224. If the user's credentials are expiring soon, a signal is sent to the locking unit 116 at step 226. If the user's credentials are not expiring soon, a signal is sent to the locking unit 116 at step 228. At step 232 the locking unit 116 unlocks the door at the access point. Further, (not shown) a signal may be sent to the sensor 106 at step 232 for signal interpretation at step 236. The sensor 106 may receive the signal sent at step 232 and may be configured to provide a visual and/or audible alert to the user at the access location, as described below.

At step 236, the control unit 108 determines the illumination sequence of the sensor 106, described below, based on at least a signal indicating user identification, access determination and face determination. At step 238, the camera illuminates the LEDs in a specific illumination sequence based on the system determinations, described below.

Referring to FIG. 3, an example visual feedback access control device includes the sensor 106, as referenced above, which may contain a plurality of segments of a light ring 306. Each of the plurality of segments of the light ring 306 may comprise a plurality of light emitting diodes (LEDs). The LEDs, for example, may be a single LED device containing one red, green, and blue (RGB) LEDs. In one example implementation, sensor 106 of FIG. 3 may comprise 8 segments, each of the 8 segments of the light ring 306 may each contain at least one LED. The illumination of the light ring 306 and the plurality of segments is described below with reference to FIG. 4. In one example implementation the sensor 106 may comprise a plurality of sensor devices 302. As described above, the one or more sensor devices 302 may be a video camera, or a still camera that captures a plurality if images. In another example implementation, the sensor 106 may alternatively or additionally comprise a plurality of infrared (IR) illumination units 304. The IR illumination units 304 may detect infrared energy (heat) and convert the detected heat into an electronic signal, which is then processed to produce a thermal image. In another example implementation, the IR units 304 may aid in night time illumination and also provide illumination in the day time to improve the facial data gathered for recognition. As illustrated in FIG. 3, for example, 16 separate IR illumination units are present, but this implementation is not limiting and it should be understood that any number of IR illumination units may be present.

In one example implementation the sensor 106 may also comprise a speaker and a microphone (not shown). The speaker and the microphone may be configured to work as an intercom systems. In an implementation, for example, the speaker and microphone may communication with other components of the system using a communication protocol, such as but not limited to the Session Initiation Protocol (SIP). In one example implementation, the speaker may be configured to generate alerts for a user attempting to access a specific location, for example, providing audible alerts that their image has been captured, the user has been identified, the user has been granted access to the specific location, the user has been denied access, the user has not been identified, and the like. For example, the audible alerts may be implemented with a synthesized voice or play an audio file to the user. Bus 122 in FIG. 1A and 1B, as described above, my provide a signal generate the alerts. In another example implementation, the microphone may provide audible communications to employees that manage operation of the system, for example, a two-way communication between the user 106 and an employee operating the system to discuss reasons for the user's denial of access to a specific location, requesting additional information from the user, or the like. In another example implementation the speaker and/or microphone of the sensor 106 may provide audible alerts and communication regarding an alarm or duress situation.

Referring to FIG. 4, an example set of access control device illumination sequences 400 include one or more illumination sequences that may be output by the sensor 106 to provide an indication too the user, e.g., of a status of their attempted access. The sensor 106, as referenced above, may contain a plurality of segments of a light ring 306 as described above in reference to FIG. 3. As described above, the sensor 106 may receive signals via bus 122 referenced in FIG. 1A and FIG. 1B. The signals may instruct the sensor 106 to illuminate the segments in different illumination sequences 400 based on one of a plurality of trigger events. For example, some trigger events may be: an image being successfully obtained by the sensor 106; the device being in a start-up state; the image being a match with one of a plurality of known images in a database when compared by the FRS 110; the image not being the match with any of the plurality of known images in the database of the FRS 110; the image being the match with the one of the plurality of known images in the database of the FRS 110 but not having an access permission to a specific location based on the management server 112; the image being the match with the one of the plurality of known images in the database of the FRS 110 and having the access permission to the specific location based on the management server 112; or an alarm/duress event. The illumination sequences 400 generated by the LEDs, for example, may be rotating green and blue colors; solid colors such as all yellow, all blue, all green all red; only the top half with solid colors; only the bottom half with solid colors; or flashing colors. Any color may be associated with any illumination sequence and with any trigger event. For example, each trigger event may have a respective preprogrammed illumination sequence, or each trigger event may be user selected.

Referring to FIG. 5, an example message and data flow 500 of a method of access control performed by an access control system implementing visual recognition may reference the aspects described above with reference to FIG. 1B. In one example, a user approaches an access point, and the user will be visible in the video stream from the sensor 106 associated with a specific access point. At step 502 the sensor 106 generates and transmits the raw video stream to the FRS 110. At step 504, the FRS 110 identifies a user and transmits the identification information of the user to the to the person tracking unit 111. For example, the FRS 110 will attempt to identify a user approaching the access point by using the live raw video feed from the sensor 106. The tracking system 113 will also record the time and position information for the identified user approaching the access point. Once the user is identified, the management server 112 will be notified, as described above. At step 506, the person tracking unit 111 requests the video information from the video recording system. At step 508, the video recording system supplies the video information to the person tracking unit 111. At step 510, the person tracking unit 111 receives a list of previous accesses of the access location by the user from the management server 112. For example, the management server 112 queries its database and assembles a list of accesses for all access points that the identified user has had over a specified period. At step 512, the person tracking unit 111 requests and receives video clips from the video recording system showing the user accessing the location. At step 514, the tracking system attempts to find tracking information of the identified user in each of the supplied video clips. At step 516, the identified video clip information, the previous identified video clip information and tracking information are sent to the person re-identification system. At steps 518 and 520, the person re-identification system will request and receive requested video clips and at step 524, the person re-identification system provides an assessment of how alike the current image of the identified user is verse the previous images of the identified user. At step 526, the tracking system 113 combines the output from the FRS 110 and the output from the person tracking unit 111 to determine whether the user is accurately identified.

In one example implementation, the determination of if a user is identified may be based upon a comparison to a threshold. For example, by combining the FRS 110 output, indicating user A with a confidence score of 98%, and the person tracking unit 111 output, indicating user A with a confidence score of 80%, then a user is considered to be identified. In another example, by combining the FRS 110 output, indicating user A with a confidence score of 70%, and the person tracking unit 111 output, indicating user A with a confidence score of 90%, then a user is considered to be identified.

In one example implementation, some algorithms implemented by the tracking unit 111 to re-identify the user may have a high dependency on what a user is wearing, and this may change from day-to-day. To mitigate against this, the selection criteria for the video clips used for person re-identification system may be changed to include, for example, only clips for the current day or only video clips since the person entered the building. Implementing these types of criteria would enforce a rule that initial access to the location or building would require a positive identification of a person by facial recognition only, but access within the building would allow use of both the FRS 110 and the tracking unit 111.

In another example implementation, the combination of the output from the FRS 110 and the output from the person tracking unit 111 may take into consideration a change of clothes during the same day (e.g., removed a big coat) by a user. For example, when both outputs have high confidence, the person will be granted access very quickly and from a further distance to the access point. When the person tracking unit 111 output confidence score is low the system will wait until it gets a high FRS 110 confidence score since the person may have changed their clothes. The tracking unit 111 may store all the different attributes of the same user when entering different access points, and the confidence of a new access will be based on a previous access where the attributes most resemble the current one, for example, when the user wore the same clothes.

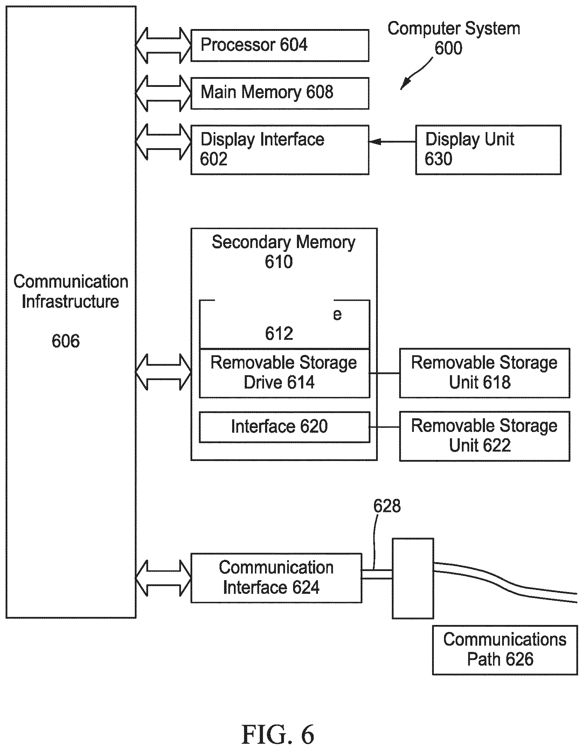

Aspects of the present disclosure may be implemented using hardware, software, or a combination thereof and may be implemented in one or more computer systems or other processing systems. In one aspect, the disclosure is directed toward one or more computer systems capable of carrying out the functionality described herein. FIG. 6 presents an example system diagram of various hardware components and other features that may be used in accordance with aspects of the present disclosure. Aspects of the present disclosure may be implemented using hardware, software, or a combination thereof and may be implemented in one or more computer systems or other processing systems. In one example variation, aspects of the disclosure are directed toward one or more computer systems capable of carrying out the functionality described herein. An example of such a computer system 600 is shown in FIG. 6.

Computer system 600 includes one or more processors, such as processor 604. The processor 604 is connected to a communication infrastructure 606 (e.g., a communications bus, crossover bar, or network). Various software aspects are described in terms of this example computer system. After reading this description, it will become apparent to a person skilled in the relevant art(s) how to implement aspects of the disclosure using other computer systems and/or architectures.

Processor 604, or any other "processor," as used herein, processes signals and performs general computing and arithmetic functions. Signals processed by the processor may include digital signals, data signals, computer instructions, processor instructions, messages, a bit, a bit stream, or other computing that may be received, transmitted and/or detected.

Communication infrastructure 606, such as a bus (or any other use of "bus" herein, such as bus 122, 126, 128, 130, and/or 132 as discussed above), refers to an interconnected architecture that is operably connected to transfer data between computer components within a singular or multiple systems. The bus may be a memory bus, a memory controller, a peripheral bus, an external bus, a crossbar switch, and/or a local bus, among others. The bus may also be a bus that interconnects components inside a access control system using protocols, such as Controller Area network (CAN), Local Interconnect Network (LIN), Wiegand and Open Supervised Device Protocol (OSDP) among others.

Further, the connection between components of computer system 600, or any other type of connection between computer-related components described herein may be referred to anoperable connection, and may include a connection by which entities are operably connected, such that signals, physical communications, and/or logical communications may be sent and/or received. An operable connection may include a physical interface, a data interface and/or an electrical interface.

Computer system 600 may include a display interface 602 that forwards graphics, text, and other data from the communication infrastructure 606 (or from a frame buffer not shown) for display on a display unit 630. Computer system 600 also includes a main memory 608, preferably random access memory (RAM), and may also include a secondary memory 610. The secondary memory 610 may include, for example, a hard disk drive 612 and/or a removable storage drive 614, representing a floppy disk drive, a magnetic tape drive, an optical disk drive, etc. The removable storage drive 614 reads from and/or writes to a removable storage unit 618 in a well-known manner. Removable storage unit 618, represents a floppy disk, magnetic tape, optical disk, etc., which is read by and written to removable storage drive 614. As will be appreciated, the removable storage unit 618 includes a computer usable storage medium having stored therein computer software and/or data.

In alternative aspects, secondary memory 610 may include other similar devices for allowing computer programs or other instructions to be loaded into computer system 600. Such devices may include, for example, a removable storage unit 622 and an interface 620. Examples of such may include a program cartridge and cartridge interface (such as that found in video game devices), a removable memory chip (such as an erasable programmable read only memory (EPROM), or programmable read only memory (PROM)) and associated socket, and other removable storage units 622 and interfaces 620, which allow software and data to be transferred from the removable storage unit 622 to computer system 600.

It should be understood that a memory, as used herein may include volatile memory and/or non-volatile memory. Non-volatile memory may include, for example, ROM (read only memory), PROM (programmable read only memory), EPROM (erasable PROM) and EEPROM (electrically erasable PROM). Volatile memory may include, for example, RAM (random access memory), synchronous RAM (SRAM), dynamic RAM (DRAM), synchronous DRAM (SDRAM), double data rate SDRAM (DDR SDRAM), and/or direct RAM bus RAM (DRRAM).

Computer system 600 may also include a communications interface 624. Communications interface 624 allows software and data to be transferred between computer system 600 and external devices. Examples of communications interface 624 may include a modem, a network interface (such as an Ethernet card), a communications port, a Personal Computer Memory Card International Association (PCMCIA) slot and card, etc. Software and data transferred via communications interface 624 are in the form of signals 628, which may be electronic, electromagnetic, optical or other signals capable of being received by communications interface 624. These signals 628 are provided to communications interface 624 via a communications path (e.g., channel) 626. This path 626 carries signals 628 and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage drive 680, a hard disk installed in hard disk drive 670, and signals 628. These computer program products provide software to the computer system 600. Aspects of the disclosure are directed to such computer program products.

Computer programs (also referred to as computer control logic) are stored in main memory 608 and/or secondary memory 610. Computer programs may also be received via communications interface 624. Such computer programs, when executed, enable the computer system 600 to perform various features in accordance with aspects of the present disclosure, as discussed herein. In particular, the computer programs, when executed, enable the processor 604 to perform such features. Accordingly, such computer programs represent controllers of the computer system 600.

In variations where aspects of the disclosure are implemented using software, the software may be stored in a computer program product and loaded into computer system 600 using removable storage drive 614, hard drive 612, or communications interface 620. The control logic (software), when executed by the processor 604, causes the processor 604 to perform the functions in accordance with aspects of the disclosure as described herein. In another variation, aspects are implemented primarily in hardware using, for example, hardware components, such as application specific integrated circuits (ASICs). Implementation of the hardware state machine so as to perform the functions described herein will be apparent to persons skilled in the relevant art(s).

In yet another example variation, aspects of the disclosure are implemented using a combination of both hardware and software.

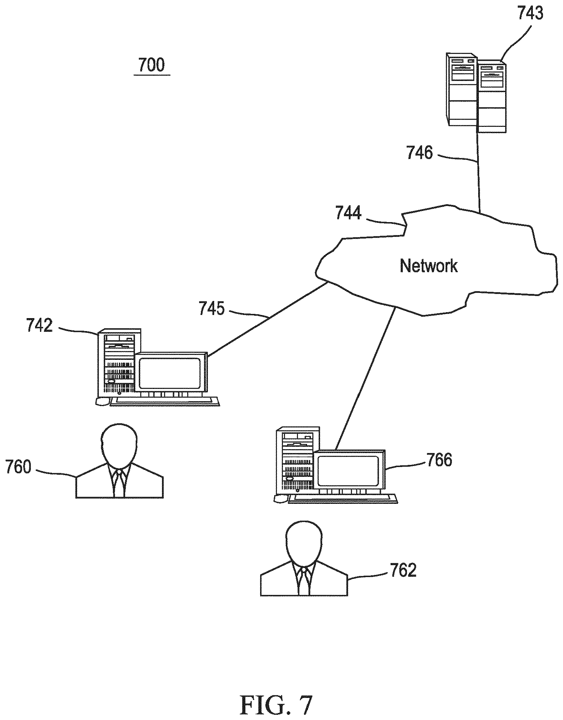

FIG. 7 is a block diagram of various example system components that may be used in accordance with aspects of the present disclosure. For example, the various components may be within the operating environment 100, or only some of the components may be within the access control system 102, and other components may be remote from the access control system 102. The system 700 includes one or more accessors 760, 762 (also referred to interchangeably herein as one or more "users" or persons seeking to gain access to a location) and one or more terminals 742, 766 (such terminals may be or include, for example, various features of the access control system 102). In one aspect, data for use in accordance with aspects of the present disclosure is, for example, input and/or accessed by accessors 760, 762 via terminals 742, 766, such as personal computers (PCs), minicomputers, mainframe computers, microcomputers, telephonic devices, or wireless devices, such as personal digital assistants ("PDAs") or a hand-held wireless devices coupled to a server 743, such as a PC, minicomputer, mainframe computer, microcomputer, or other device having a processor and a repository for data and/or connection to a repository for data, via, for example, a network 744, such as the Internet or an intranet, and couplings 745, 746, 764. The couplings 745, 746, 764 include, for example, wired, wireless, or fiber optic links. In another example variation, the method and system in accordance with aspects of the present disclosure operate in a stand-alone environment, such as on a single terminal.

The aspects of the disclosure discussed herein may also be described and implemented in the context of computer-readable storage medium storing computer-executable instructions. Computer-readable storage media includes computer storage media and communication media. For example, flash memory drives, digital versatile discs (DVDs), compact discs (CDs), floppy disks, and tape cassettes. Computer-readable storage media may include volatile and nonvolatile, removable and non-removable media implemented in any method or technology for storage of information such as computer readable instructions, data structures, modules or other data.

## Claims

1. An access control system, comprising:
a visual feedback access control device comprising:
a sensor, the sensor comprising:
- a first and a second camera used in conjunction with each other such as the first camera is configured to capture images of a user (101) comprising the face while the second camera is configured to obtain a raw live video stream for performing liveness detection of the user (101) based on a raw live video stream;
the access control system further comprising:
a control unit (108) and a face recognition server (110), the control unit (108) is configured to receive respective images and the raw live video stream, forward the respective images and video stream for facial recognition and liveness detection to the face recognition server (110), receive a determination signal from the face recognition server (110) if liveness is detected, wherein the determination signal indicates whether the respective images are associated with an identified user (101), and generate a control signal based on the identification information;
an access control device (114) configured to determine when the identified user (101) has been granted access to a location and generate an open signal; and
a locking unit (116) movable between a locked and unlocked position based on the open signal.

2. The access control system of claim 1, wherein the visual feedback access control device comprises a plurality of light emitting diodes ("LEDs") arranged in a plurality of segments relative to the first and second camera, each segment of the plurality of segments being individually controllable; wherein the LEDs are configured to illuminate upon a received control signal based upon one or more access control trigger events.

3. The access control system of claim 1, wherein, when the user (101) is identified but is not granted access to a location, the locking unit (116) remains in the locked position.

4. The access control system of claim 2, wherein the one or more access control trigger events include:
the images being successfully obtained by the first and second cameras;
the device being in a start-up state;
the image being a match with one of a plurality of known images in a database;
the image not being the match with any of the plurality of known images in the database;
the image being the match with the one of the plurality of known images in the database but not having an access permission to a specific location;
the image being the match with the one of the plurality of known images in the database and having the access permission to the specific location; or
an alarm/duress event.

5. The access control system of claim 4, further comprising a speaker configured to produce an audible output in response to the trigger event comprising the alarm/duress event.

6. The access control system of claim 2, wherein the plurality of segments comprising the LEDs are configured to be illuminated one at a time or in one or more combinations based on a corresponding one of the one or more trigger events.

7. The access control system of claim 2, wherein the plurality of segments comprising the LEDs are configured to be illuminated in at least one of a plurality of illuminated patterns including: all of the plurality of segments, a top half of the plurality of segments, a bottom half of the plurality of segments, a right half of the plurality of segments, a left half of the plurality of segments, alternating ones of the plurality of segments, or a sequence of two or more of the plurality of segments.

8. The access control system of claim 7, wherein each illuminated pattern is produced in a plurality of colors; wherein each trigger event correlates to a specific one of the plurality of illuminated patterns in a specific illuminated color.

9. A method for providing visual feedback for an access control system (102) according to claim 1, comprising steps of:
capturing, via the first camera, images of a user (101) comprising the face while the second camera obtains a raw live video stream for performing liveness detection of the user (101) based on a raw live video stream;
receiving respective images and raw live video stream, via the control unit (108), and forwarding the respective images for facial recognition and the raw live video stream for liveness detection to the face recognition server (110), receiving from the face recognition server (110) the determination signal if liveness is detected, wherein the determination signal indicates whether the respective images are associated with an identified user (101), and generating a control signal based on the identification information;
determining, via an access control device, when the identified user (101) has been granted access to a location and generating an open signal; and
moving a locking unit (116) between a locked and unlocked position based on the open signal.

10. The method of claim 9, further comprising: illuminating, via light emitting diodes ("LEDs") of a visual feedback access control device which comprises a plurality of light emitting diodes ("LEDs") arranged in a plurality of segments relative to the first and second camera, each segment of the plurality of segments being individually controllable; wherein the LEDs are configured to illuminate upon a received control signal based upon one or more access control trigger events, upon receiving a control signal based upon the one or more access control trigger events.

11. The method of claim 10, wherein the one or more access control trigger events include:
the image being successfully obtained by the first and second camera;
the device being in a start-up state;
the image being a match with one of a plurality of known images in a database;
the image not being the match with any of the plurality of known images in the database;
the image being the match with the one of the plurality of known images in the database but not having an access permission to a specific location;
the image being the match with the one of the plurality of known images in the database and having the access permission to the specific location; or
an alarm/duress event.

12. The method of claim 11, further comprising producing an audible output from a speaker in response to the trigger event comprising the alarm/duress.

13. The method of claim 12, wherein the plurality of segments comprising the LEDs are configured to be illuminated one at a time or in one or more combinations based on a corresponding one of the one or more trigger events.

14. The method of claim 13, wherein the plurality of segments comprising the LEDs are configured to be illuminated in at least one of a plurality of illuminated patterns including: all of the plurality of segments, a top half of the plurality of segments, a bottom half of the plurality of segments, a right half of the plurality of segments, a left half of the plurality of segments, alternating ones of the plurality of segments, or a sequence of two or more of the plurality of segments.

15. The method of claim 14, wherein each illuminated pattern is produced in a plurality of colors; wherein each trigger event correlates to a specific one of the plurality of illuminated patterns in a specific illuminated color.

## Patentansprüche

1. Zugangskontrollsystem, umfassend:
eine Zugangskontrollvorrichtung mit visueller Rückmeldung, umfassend:
einen Sensor, wobei der Sensor Folgendes umfasst:
- eine erste und eine zweite Kamera, die in Verbindung miteinander verwendet werden, so dass die erste Kamera konfiguriert ist, um Bilder eines Benutzers (101) aufzunehmen, die das Gesicht umfassen, während die zweite Kamera konfiguriert ist, um einen rohen Live-Videostream zur Durchführung einer Lebendigkeitserkennung des Benutzers (101) auf der Grundlage eines rohen Live-Videostreams zu erhalten;
wobei das Zugangskontrollsystem ferner Folgendes umfasst:
eine Steuereinheit (108) und einen Gesichtserkennungsserver (110), wobei die Steuereinheit (108) konfiguriert ist, um entsprechende Bilder und den rohen Live-Videostream zu empfangen, die jeweiligen Bilder und Videostream zur Gesichtserkennung und Lebendigkeitserkennung an den Gesichtserkennungsserver (110) weiterzuleiten, ein Bestimmungssignal vom Gesichtserkennungsserver (110) zu empfangen, wenn Lebendigkeit erkannt wird, wobei das Bestimmungssignal angibt, ob die jeweiligen Bilder einem identifizierten Benutzer (101) zugeordnet sind, und ein Steuersignal basierend auf den Identifikationsinformationen zu erzeugen;
eine Zugangskontrollvorrichtung (114), die dazu konfiguriert ist, zu bestimmen, wann dem identifizierten Benutzer (101) Zugang zu einem Ort gewährt wurde, und ein Öffnungssignal zu erzeugen; und
eine Verriegelungseinheit (116), die basierend auf dem Öffnungssignal zwischen einer verriegelten und einer entriegelten Position bewegbar ist.

2. Zugangskontrollsystem nach Anspruch 1, wobei die Zugangskontrollvorrichtung mit visueller Rückmeldung eine Vielzahl von Leuchtdioden ("LEDs") umfasst, die in einer Vielzahl von Segmenten relativ zur ersten und zweiten Kamera angeordnet sind, wobei jedes Segment der Vielzahl von Segmenten individuell steuerbar ist; wobei die LEDs so konfiguriert sind, dass sie bei einem empfangenen Steuersignal basierend auf einem oder mehreren Zugangskontroll-Auslöseereignissen aufleuchten.

3. Zugangskontrollsystem nach Anspruch 1, wobei die Verriegelungseinheit (116) in der verriegelten Position bleibt, wenn der Benutzer (101) identifiziert wird, aber ihm kein Zugang zu einem Ort gewährt wird.

4. Zugangskontrollsystem nach Anspruch 2, wobei das eine oder die mehreren Zugangskontroll-Auslöseereignisse Folgendes umfassen:
die Bilder werden von der ersten und zweiten Kamera erfolgreich aufgenommen;
die Vorrichtung befindet sich in einem Startzustand;
das Bild stimmt mit einem von einer Vielzahl von bekannten Bildern in einer Datenbank überein;
das Bild stimmt mit keinem der Vielzahl von bekannten Bildern in der Datenbank überein;
das Bild stimmt mit dem einen der Vielzahl von bekannten Bildern in der Datenbank überein, verfügt jedoch nicht über eine Zugangsberechtigung für einen bestimmten Ort;
das Bild stimmt mit dem einen der Vielzahl von bekannten Bildern in der Datenbank überein und verfügt über eine Zugangsberechtigung für den bestimmten Ort; oder
ein Alarm-/Zwangsereignis.

5. Zugangskontrollsystem nach Anspruch 4, ferner umfassend einen Lautsprecher, der so konfiguriert ist, dass er als Reaktion auf das Auslöseereignis, das das Alarm-/Zwangsereignis umfasst, eine akustische Ausgabe erzeugt.

6. Zugangskontrollsystem nach Anspruch 2, wobei die Vielzahl von Segmenten, die die LEDs umfassen, konfiguriert sind, um einzeln oder in einer oder mehreren Kombinationen basierend auf einem entsprechenden des einen oder der mehreren Auslöseereignisse beleuchtet zu werden.

7. Zugangskontrollsystem nach Anspruch 2, wobei die Vielzahl von Segmenten, die die LEDs umfassen, konfiguriert sind, um in mindestens einem von einer Vielzahl von beleuchteten Mustern beleuchtet zu werden, einschließlich: aller der Vielzahl von Segmenten, einer oberen Hälfte der Vielzahl von Segmenten, einer unteren Hälfte der Vielzahl von Segmenten, einer rechten Hälfte der Vielzahl von Segmenten, einer linken Hälfte der Vielzahl von Segmenten, abwechselnder Segmente aus der Vielzahl von Segmenten oder einer Folge von zwei oder mehr der Vielzahl von Segmenten.

8. Zugangskontrollsystem nach Anspruch 7, wobei jedes beleuchtete Muster in einer Vielzahl von Farben erzeugt wird; wobei jedes Auslöseereignis mit einem bestimmten der Vielzahl von beleuchteten Mustern in einer bestimmten beleuchteten Farbe korreliert.

9. Verfahren zur Bereitstellung einer visuellen Rückmeldung für ein Zugangskontrollsystem (102) nach Anspruch 1, umfassend die folgenden Schritte:
Erfassen von Bildern eines Benutzers (101), die das Gesicht umfassen, über die erste Kamera, während die zweite Kamera einen rohen Live-Videostream erhält, um eine Lebendigkeitserkennung des Benutzers (101) basierend auf einem rohen Live-Videostream durchzuführen;
Empfangen von entsprechenden Bildern und rohem Live-Videostream über die Steuereinheit (108) und Weiterleiten der jeweiligen Bilder zur Gesichtserkennung und des rohen Live-Videostreams zur Lebendigkeitserkennung an den Gesichtserkennungsserver (110), Empfangen des Bestimmungssignals vom Gesichtserkennungsserver (110), wenn Lebendigkeit erkannt wird, wobei das Bestimmungssignal angibt, ob die jeweiligen Bilder einem identifizierten Benutzer zugeordnet sind (101), und Erzeugen eines Steuersignals basierend auf den Identifikationsinformationen;
Bestimmen über eine Zugangskontrollvorrichtung, wann dem identifizierten Benutzer (101) Zugang zu einem Ort gewährt wurde, und Erzeugen eines Öffnungssignals; Und Bewegen einer Verriegelungseinheit (116) zwischen einer verriegelten und entriegelten Position basierend auf dem Öffnungssignal.

10. Verfahren nach Anspruch 9, ferner umfassend:
Beleuchten einer Zugangskontrollvorrichtung mit visueller Rückmeldung, die eine Vielzahl von Leuchtdioden ("LEDs") umfasst, über Leuchtdioden ("LEDs"), die in einer Vielzahl von Segmenten relativ zur ersten und zweiten Kamera angeordnet sind, wobei jedes Segment der Vielzahl von Segmenten individuell steuerbar ist; wobei die LEDs so konfiguriert sind, dass sie bei Empfang eines Steuersignals basierend auf einem oder mehreren Zugangskontroll-Auslöseereignissen aufleuchten, wenn sie ein Steuersignal empfangen, das auf dem einen oder mehreren Zugangskontroll-Auslöseereignissen basiert.

11. Verfahren nach Anspruch 10, wobei das eine oder die mehreren Zugangskontroll-Auslöseereignisse Folgendes umfassen:
das Bild wurde von der ersten und zweiten Kamera erfolgreich aufgenommen;
die Vorrichtung befindet sich in einem Startzustand;
das Bild stimmt mit einem von einer Vielzahl von bekannten Bildern in einer Datenbank überein;
das Bild stimmt mit keinem der Vielzahl von bekannten Bildern in der Datenbank überein;
das Bild stimmt mit dem einen der Vielzahl von bekannten Bildern in der Datenbank überein, verfügt jedoch nicht über eine Zugangsberechtigung für einen bestimmten Ort;
das Bild stimmt mit dem einen der Vielzahl von bekannten Bildern in der Datenbank überein und verfügt über eine Zugangsberechtigung für den bestimmten Ort; oder
ein Alarm-/Zwangsereignis.

12. Verfahren nach Anspruch 11, ferner umfassend das Erzeugen einer akustischen Ausgabe von einem Lautsprecher als Reaktion auf das Auslöseereignis, das den Alarm-/Zwangsereignis umfasst.

13. Verfahren nach Anspruch 12, wobei die Vielzahl von Segmenten, die die LEDs umfassen, konfiguriert sind, um einzeln oder in einer oder mehreren Kombinationen basierend auf einem entsprechenden des einen oder der mehreren Auslöseereignisse beleuchtet zu werden.

14. Verfahren nach Anspruch 13, wobei die Vielzahl von Segmenten, die die LEDs umfassen, konfiguriert sind, in mindestens einem von einer Vielzahl von beleuchteten Mustern beleuchtet zu werden, einschließlich: aller der Vielzahl von Segmenten, einer oberen Hälfte der Vielzahl von Segmenten, einer unteren Hälfte der Vielzahl von Segmenten, einer rechten Hälfte der Vielzahl von Segmenten, einer linken Hälfte der Vielzahl von Segmenten, abwechselnder Segmente aus der Vielzahl von Segmenten oder einer Folge von zwei oder mehr der Vielzahl von Segmenten.

15. Verfahren nach Anspruch 14, wobei jedes beleuchtete Muster in einer Vielzahl von Farben erzeugt wird; wobei jedes Auslöseereignis mit einem bestimmten der Vielzahl von beleuchteten Mustern in einer bestimmten beleuchteten Farbe korreliert.

## Revendications

1. Système de contrôle d'accès, comprenant :
un dispositif de contrôle d'accès à rétroaction visuelle comprenant :
un capteur, le capteur comprenant :
- une première et une seconde caméra utilisées conjointement l'une avec l'autre de sorte que la première caméra est configurée pour capturer des images d'un utilisateur (101) comprenant le visage tandis que la seconde caméra est configurée pour obtenir un flux vidéo brut en direct pour effectuer une détection d'activité de l'utilisateur (101) sur la base d'un flux vidéo brut en direct ;
le système de contrôle d'accès comprenant en outre :
une unité de contrôle (108) et un serveur de reconnaissance faciale (110), l'unité de contrôle (108) est configurée pour recevoir des images respectives et le flux vidéo brut en direct, transmettre les images respectives et le flux vidéo pour la reconnaissance faciale et la détection d'activité au serveur de reconnaissance faciale (110), recevoir un signal de détermination en provenance du serveur de reconnaissance faciale (110) si la vivacité est détectée, dans lequel le signal de détermination indique si les images respectives sont associées à un utilisateur (101) identifié, et générer un signal de contrôle sur la base des informations d'identification ;
un dispositif de contrôle d'accès (114) configuré pour déterminer quand l'utilisateur (101) identifié a obtenu l'accès à un emplacement et générer un signal d'ouverture ; et
une unité de verrouillage (116) mobile entre une position verrouillée et déverrouillée sur la base du signal d'ouverture.

2. Système de contrôle d'accès selon la revendication 1, dans lequel le dispositif de contrôle d'accès à retour visuel comprend une pluralité de diodes électroluminescentes (« DEL ») disposées en une pluralité de segments par rapport à la première et à la seconde caméra, chaque segment de la pluralité de segments pouvant être contrôlé individuellement ; les DEL étant configurées pour s'allumer lors d'un signal de contrôle reçu sur la base d'un ou de plusieurs événements déclencheurs de contrôle d'accès.

3. Système de contrôle d'accès selon la revendication 1, dans lequel, lorsque l'utilisateur (101) est identifié mais n'est pas autorisé à accéder à un emplacement, l'unité de verrouillage (116) reste en position verrouillée.

4. Système de contrôle d'accès selon la revendication 2, dans lequel les un ou plusieurs événements déclencheurs de contrôle d'accès comportent :
les images étant obtenues avec succès par les première et seconde caméras ;
le dispositif étant dans un état de démarrage ;
l'image correspondant à l'une d'une pluralité d'images connues dans une base de données ;
l'image ne correspondant à aucune de la pluralité d'images connues dans la base de données ;
l'image correspondant à l'une de la pluralité d'images connues dans la base de données mais ne disposant pas d'une autorisation d'accès à un emplacement spécifique ;
l'image correspondant à l'une de la pluralité d'images connues dans la base de données et disposant de l'autorisation d'accès à l'emplacement spécifique ; ou
un événement d'alarme/contrainte.

5. Système de contrôle d'accès selon la revendication 4, comprenant en outre un haut-parleur configuré pour produire une sortie sonore en réponse à l'événement déclencheur comprenant l'événement d'alarme / de contrainte.

6. Système de contrôle d'accès selon la revendication 2, dans lequel la pluralité de segments comprenant les DEL sont configurés pour être allumés un à la fois ou dans une ou plusieurs combinaisons sur la base de l'un correspondant des un ou plusieurs événements déclencheurs.

7. Système de contrôle d'accès selon la revendication 2, dans lequel la pluralité de segments comprenant les DEL sont configurés pour être allumés selon au moins l'un d'une pluralité de motifs lumineux comportant : la totalité de la pluralité de segments, une moitié supérieure de la pluralité de segments, une moitié inférieure de la pluralité de segments, une moitié droite de la pluralité de segments, une moitié gauche de la pluralité de segments, des segments alternés de la pluralité de segments, ou une séquence de deux segments ou plus de la pluralité de segments.

8. Système de contrôle d'accès selon la revendication 7, dans lequel chaque motif lumineux est produit dans une pluralité de couleurs ; dans lequel chaque événement déclencheur est en corrélation avec l'un spécifique de la pluralité de motifs lumineux dans une couleur lumineuse spécifique.

9. Procédé pour fournir un retour visuel pour un système de contrôle d'accès (102) selon la revendication 1, comprenant les étapes :
de capture, par l'intermédiaire de la première caméra, d'images d'un utilisateur (101) comprenant le visage tandis que la seconde caméra obtient un flux vidéo brut en direct pour effectuer une détection d'activité de l'utilisateur (101) sur la base d'un flux vidéo brut en direct ;
de réception d'images respectives et d'un flux vidéo brut en direct, par l'intermédiaire de l'unité de contrôle (108), et de transmission d'images respectives pour la reconnaissance faciale et le flux vidéo brut en direct pour la détection d'activité au serveur de reconnaissance faciale (110), de réception, en provenance du serveur de reconnaissance faciale (110), du signal de détermination si la vivacité est détectée, dans lequel le signal de détermination indique si les images respectives sont associées à un utilisateur identifié (101), et la génération d'un signal de contrôle sur la base des informations d'identification ;
de détermination, par l'intermédiaire d'un dispositif de contrôle d'accès, du moment où l'utilisateur identifié (101) a obtenu l'accès à un emplacement, et de génération d'un signal d'ouverture ; et
de déplacement d'une unité de verrouillage (116) entre une position verrouillée et déverrouillée sur la base du signal d'ouverture.

10. Procédé selon la revendication 9, comprenant en outre : l'allumage, par l'intermédiaire de diodes électroluminescentes (« DEL »), d'un dispositif de contrôle d'accès à retour visuel qui comprend une pluralité de diodes électroluminescentes (« DEL ») disposées en une pluralité de segments par rapport aux première et seconde caméras, chaque segment de la pluralité de segments pouvant être contrôlé individuellement ; les DEL étant configurées pour s'allumer lors d'un signal de contrôle reçu sur la base d'un ou de plusieurs événements déclencheurs de contrôle d'accès, lors de la réception d'un signal de contrôle sur la base des un ou plusieurs événements déclencheurs de contrôle d'accès.

11. Procédé selon la revendication 10, dans lequel le ou les événements déclencheurs de contrôle d'accès comprennent :
l'image étant obtenue avec succès par les première et seconde caméras ;
le dispositif étant dans un état de démarrage ;
l'image correspondant à l'une d'une pluralité d'images connues dans une base de données ;
l'image ne correspondant à aucune de la pluralité d'images connues dans la base de données ;
l'image correspondant à l'une de la pluralité d'images connues dans la base de données mais ne disposant pas d'une autorisation d'accès à un emplacement spécifique ;
l'image correspondant à l'une de la pluralité d'images connues dans la base de données et disposant de l'autorisation d'accès à l'emplacement spécifique ; ou
un événement d'alarme/contrainte.

12. Procédé selon la revendication 11, comprenant en outre la production d'une sortie sonore provenant d'un haut-parleur en réponse à l'événement déclencheur comprenant l'alarme/la contrainte.

13. Procédé selon la revendication 12, dans lequel la pluralité de segments comprenant les DEL sont configurés pour être allumés un à la fois ou dans une ou plusieurs combinaisons sur la base de l'un correspondant des un ou plusieurs événements déclencheurs.

14. Procédé selon la revendication 13, dans lequel la pluralité de segments comprenant les DEL sont configurés pour être allumés selon au moins l'un d'une pluralité de motifs allumés comprenant : la totalité de la pluralité de segments, une moitié supérieure de la pluralité de segments, une moitié inférieure de la pluralité de segments, une moitié droite de la pluralité de segments, une moitié gauche de la pluralité de segments, des segments alternés de la pluralité de segments, ou une séquence de deux segments ou plus de la pluralité de segments.

15. Procédé selon la revendication 14, dans lequel chaque motif lumineux est produit dans une pluralité de couleurs ; dans lequel chaque événement déclencheur est en corrélation avec l'un spécifique de la pluralité de motifs lumineux dans une couleur lumineuse spécifique.
